# EUROPEAN PATENT SPECIFICATION

(11) **EP 3 616 522 B1**
(45) Date of publication and mention of the grant of the patent: **29.09.2021**
(21) Application number: 18860595.0
(22) Date of filing: 09.03.2018
(51) Int. Cl.: A21C 9/06, A21C 9/08, A21C 11/10, A21C 3/10, A21C 9/04

(54) **STUFFED FOOD FORMING MACHINE**
MASCHINE ZUR AUSBILDUNG VON GEFÜLLTEN LEBENSMITTELN
MACHINE DE FORMATION D'ALIMENTS FOURRÉS

(30) Priority: 30.09.2017 CN 201710913622
(43) Date of publication of application: 04.03.2020
(73) Proprietor: Shanghai Soontrue Machinery Equipment Co., Ltd., Shanghai 210700 (CN)
(72) Inventor: HUANG, Song, Shanghai 201700 (CN)
(74) Representative: Osterhoff, Utz
(86) International application number: PCT/CN2018/078535
(87) International publication number: WO 2019/062032

(56) References cited:
- WO-A1-2013/179108
- CN-A- 105 724 507
- CN-A- 107 410 406
- CN-U- 203 801 585
- CN-U- 205 756 904
- CN-U- 205 756 904
- CN-U- 205 756 906
- CN-U- 205 756 906
- CN-U- 206 518 034
- CN-Y- 201 160 466
- KR-Y1- 200 457 586
- US-A- 3 633 517
- US-A1- 2012 219 674
- US-A1- 2015 079 243

## Description

### TECHNICAL FIELD

The present application relates to a technical field of food processing, and more particularly to a stuffed food forming machine.

### BACKGROUND

The volume of the apparatus for forming stuffed food is usually large, especially the dough wrapper processing device. How to miniaturize stuffed food forming machine has been a difficult problem in the field of food processing.

The Chinese patent application CN200820062031.X (filing date: Jan. 29, 2018, application name "DUMPLING MAKING MACHINE") disclosed a dumpling making machine which includes a dough wrapper feeding device, a stuffing injection device, a dumpling shaping device, a discharge tailstock and a driving device. The dumpling forming device includes a horizontal station rotary table body, a forming mold disposed on the surface of the rotary table body, a dough wrapper feeding apparatus, a dough wrapper receiving station and a stuffing receiving station which are corresponding to the stuffing injection device and are disposed on the rotary table body. A jacking device is arranged at a folding station, one side of a dumpling pushing station is provided with a pushing device, and the other side of the dumpling pushing station is provided with the discharge tailstock. The mold is flattened, clamped, opened, and unfolded in different stations under the control of a guide rail.

Furthermore, a Chinese patent application CN201610274834.0 (filing date: Apr. 28, 2016, application name "COMPACT STUFFED FOOD FORMING MACHINE") disclosed a compact stuffed food forming machine which belongs to the technical field of food processing and in particular to a compact stuffed food forming machine. The compact stuffed food forming machine includes a framework and a station rotary table body located on the framework. A dough wrapper forming device, a stuffing injection device, a pressing device and a discharge device are respectively disposed around the station rotary table body. A wrapper forming station is disposed on the wrapper forming device; a stuffing injection station is disposed on the stuffing injection device; a pressing station is disposed on the pressing device; and a discharging station is disposed on the discharging device. A split shaping mold is further disposed on the framework, and the split shaping mold includes a rotary wrapper receiving plate and a molding cup.

Documents US 2012/219674 A1 and US 2015/079243 A1 disclose stuffed food forming machines.

Neither of the above technologies has proposed a convenient and space-saving solution to process the dough and recycle the dough wrapper residues after cutting. As a result, the volume of the whole forming apparatus cannot be further reduced. At the same time, the wrapper residues recycle device is complicated and requires multiple control points, thus inducing high failure rate and high maintenance and operation costs.

### SUMMARY

In order to solve the problem that the volume of the stuffed food forming machine can not be further reduced, the present application provides a stuffed food forming machine capable of effectively processing the dough and recucling the dough wrapper residues.

In order to achieve the above purpose, the present application provides:
a stuffed food forming machine, including: a framework; a rotary table assembly arranged on the framework and defining an opening configured to collect the dough residue; a sending and cutting station; and a stuffing injection station, where at least the sending and cutting station and the stuffing injection station are arranged around the rotary table assembly, and where a distance between an internal side of a shaping mold rotated together with the rotary table assembly and a center of the rotary table assembly is larger than a distance between an internal side of the opening and the center of the rotary table assembly.

The stuffed food mentioned in the present application may inlude stuffed foods such as dumplings, sweet dumplings, buns, Siu-mai, Custard bun and Wonton. Taking the process of making dumplings as an example, the uncut dough is called a dumpling wrapper dough belt. Wrappers cut from the dumpling wrapper dough belt by the cutter are called dough wrappers, and the remaining dough is called dough residue. When a distance between an internal side of the shaping mold and a center of the rotary table assembly is larger than a distance between an internal side of the opening and the center of the rotary table assembly, the dough residue may easily drop into the opening, so as to be collected.

A sending and cutting part is provided at the sending and cutting station. A stuffing injection part is provided at the stuffing injection station. The sending and cutting part and the stuffing injection part may adopt conventional structures. The sending and cutting station and stuffing injection station are provided around the rotary table assembly while other processing stations may be provided inside the rotary table body or at other positions.

A pressing and shaping station and a discharge station are arranged in sequence around the rotary table assembly and beside the stuffing injection station. Where a pressing and shaping part is provided at the pressing and shaping station, and a discharge part is provided at the discharge station. The pressing and shaping part and the discharge part may adopt conventional structures.

The overall working principle is as follows.

### Step 1: sending and cutting.

A shaping mold on a rotary table body is arranged below a sending and cutting station. A dough wrapper is cut into a specified shape from a dough belt and falls on the shaping mold below. A dough residue enters an opening on the rotary table body and is transported downwardly to be collected.

### Step 2: injecting.

The shaping mold after receiving the dough wrapper is driven by the rotary table body to rotate to a stuffing injection station where the stuffing is injected onto the dough wrapper.

Preferably, the method further includes the following steps:

### Step 3: pressing and shaping.

The shaping mold after injecting is driven by the rotary table body to rotate to a pressing and shaping station where the dough wrapperis pressed and shaped.

### Step 4: discharging.

The shaping mold after pressing and shaping is driven by the rotary table body to rotate to a discharge station where a final product is discharged.
The structure of the rotary table assembly is as follows.

The rotary table assembly includes the rotary table body defining the opening configured to collect the dough residue, and a plurality of the shaping molds evenly distributed on the rotary table body. A distance between the internal side of the shaping mold and a center of the rotary table body is larger than a distance between the internal side of the opening and the center of the rotary table body. The opening is a through hole penetrating the rotary table body. When a distance between an internal side of the shaping mold and a center of the rotary table assembly is larger than a distance between an internal side of the opening and the center of the rotary table assembly, the dough residue may easily drop into the opening, so as to be collected.

The opening is continuously defined on the rotary table body, namely, there is no break along the opening, which guarantees a continuous collection of the dough residue when the rotary table body is rotating. The structure of the opening must be continuously arranged to collect the dough residue while the rotary table body is rotating.

When the opening is circular, it may be defined at the center of the rotary table body.

When the opening is annular, it may be defined at the center or a center-outward position of the rotary table body.

The opening penetrates an upper surface and a lower surface of the rotary table body.

Relative positions of the shaping molds and the opening are as follows.

Upper surfaces of the plurality of shaping molds are located above an upper surface of the opening, and the plurality of shaping molds are arranged outside the opening.

Or upper surfaces of the plurality of shaping molds are located above an upper surface of the opening, and projections of the plurality of shaping modes in a vertical direction partially or completely falls within the opening.

A structure of the rotary table body is as follows.

The rotary table body is rectangular, circular or irregular.

A rotation sleeve connected with a worm wheel is connected to a bottom of the rotary table body. The worm wheel is connected with a worm screw, and the worm screw is connected with a motor.

A structure of a rail is as follows.

A base is arranged under the rotary table body. A guiding plate is arranged between the base and the rotary table body, and the guilding plate is a cylinder as a whole. A first guiding rail is defined on an external surface of the guilding plate, and the first guiding rail cooperates with a first roller on a catch plate on the shaping mold to move the catch plate up and down.

The guiding plate is a continuous cylinder.

At least one disconnected portion is defined on the cylinder of the guiding plate. The disconnected portion is partly or entirely disconnected. The guiding plate may be provided at stations where structures of the shaping molds move up and down. The guiding plate is not needed for stations where height will not be adjusted.

A second guiding rail is defined on an edge of the base, and the second guiding rail cooperates with a second roller of the molding cup on the shaping mold to move the molding cup up and down.

The working principle of the rotary table assembly is as follows.

The motor drives the rotary table body to rotate the shaping molds which are connected to the rotary table body. The dough residue after cutting enters the opening on the rotary table body, so as to be collected. A base and a guiding plate which are arranged under the rotary table body are separated from the rotary table body and are static during working. A guiding rail is provided on both the base and the guiding plate respectively. Guiding rollers on the shaping molds are guided by the guiding rail to drive a catch plate and the molds to move up and down respectively.

The working principle of the guiding rail is as follows.

Specifically, the shaping molds adopts conventional structure. Each shaping mold includes a catch plate connected with a first roller below through a first connecting rod; and a molding cup provided in the catch plate and connected with a second roller below through a second connecting rod. Since the shaping molds are rotated with the rotating disc while the guiding plate and the base remain still, the catch plate moves up and down by the first roller moving along a wave-shaped track in the first guiding rail on the external surface of the guiding plate. The second guiding rail cooperates with the second roller to move the molding cups up and down. As a result, different parts of the shaping molds move up and down at different stations.

The structure of the sending and cutting part is as follows.

The sending and cutting part includes a guiding pillar; a cylinder sleeve sleeved on the guiding pillar; a cutter holding plate connected with the cylinder sleeve and connected with an eccentric wheel through a connecting rod, where the eccentric wheel is driven by a motor directly; a cutter mounted under the cutter holding plate; a cutting plate arranged under the cutter; and a cutter hole defined on the cutting plate corresponding to the cutter. The cutter hole cooperates with the cutter to cut the dough wrappers.

The sending and cutting part further includes: two dough wrapper supporters laterally arranged; two dough feeding rollers mounted between the two dough wrapper supporters in sequence and driven directly by a motor; a plurality of auxiliary rollers arranged between the two dough feeding rollers, where the cutting plate is arranged between the plurality of auxiliary rollers and no conveyor belt which is essential to the conventional machines is need; a supporting pillar provided on an external side of each dough wrapper supporter and provided with the guiding pillar on a top end; a groove defined on an external end of each dough wrapper supporter and configured to accommodate a dough belt roller, where the dough belt is wound to rolls by the dough belt rollers which are placed in the grooves; a driven roller provided above the dough feeding roller; and a drive belt connected the two dough feeding rollers to rotate the two dough feeding rollers synchronously.

The working principle of the sending and cutting is as follows.

The dough belt is driven by the dough feeding rolle to move toward the cutter. When the dough belt is conveyed below the cutter, the motor directly drives the eccentric wheel to rotate, in such a manner the connecting rod is rotated with the eccentric wheel. The cutter holding plate is connected with and driven by the connecting rod and the cylinder sleeve to move up and down along the guiding pillar. The cutter moves up and down with the cutter holding plate and cooperates with the cutter hole on the cutting plate to cut the dough wrapper.

The structure of the stuffing injection part is as follows.

The stuffing injection part includes a supporting frame; a hopper arranged on the supporting frame; a rotating base arranged on the supporting frame; a rotating valve provided inside the rotating base and driven directly by a motor to rotate; a stuffing inlet tube connecting the hopper and a top end of the rotating base; a stuffing outlet tube connected below the rotating base; a transverse injecting tube arranged on a lateral side of the rotating base; a transverse injecting rod provided inside the transverse injecting tube; a longitude injecting tube provided at an outlet of the stuffing outlet tube; a gear rack driving mechanism driving the longitude injecting tube to move up and down and provided inside the supporting frame; an eccentric wheel driving mechanism driving the transverse injecting rod to move horizontally; a screw conveyor provided inside the hopper; a worm driving mechanism driving the screw conveyor to rotate; a longitude injecting rod provided inside the longitude injecting tube and driven by the gear rack driving mechanism to move up and down inside the longitude injecting tube to push the stuffing downwardly from the outlet of the stuffing outlet tube; and an L-shaped tunnel provided inside the rotating valve. The gear rack driving mechanism, the eccentric wheel driving mechanism and the worm driving mechanism are driven separately by different motors, which means each driving mechanism is driven by a different motor.

The working principle of the stuffing injection part is as follows.

The motor drives the worm driving mechanism to rotate, and the worm driving mechanism drives the screw conveyor inside the hopper to stir stuffing. The stuffing is conveyed to the rotating valve after being stirred by the screw conveyor. The motor directly drives the rotating valve to rotate by 90 degrees counter-clockwise after the rotating valve is filled with the stuffing. Then the motor drives the eccentric wheel driving mechanism to drive the transverse injecting rod to move horizontally to push the stuffing out from a bottom of the rotating valve and move the stuffing to an outlet of the stuffing outlet tube. The motor drives the gear rack driving mechanism to drive the longitude injecting rod to move up and down to push down the stuffing from the outlet of the stuffing outlet tube. The motor drives the gear rack driving mechanism to drive the longitude injecting tube to move down to push the stuffing into the dough wrapper.

The structure of the pressing and shaping part is as follows.

The pressing and shaping part includes a supporting pillar; a pair of pressing molds fixed on the supporting pillar, where a top of at least one of the pressing molds is connected with a motor; two gears provided on top ends of the pair of pressing molds respectively, where the two gears are engaged with each other; two pressing blocks provided on two bottom ends of the pair of pressing molds respectively, where the two pressing blocks are opposite to each other, and pressing surfaces of the pressing blocks are curved, and one of the pressing blocks is laterally concave, and the other of the pressing blocks is laterally convex; and two semicircle rotating plates where the two gears are provided on respectively, where curved surfaces of the two rotating plates are opposite to each other.

The working principle of the pressing and shaping part is as follows.

The motor drives the top of one of the pressing molds to rotate. Since the top ends of the pressing molds are engaged with each other, the top of the other of the pressing molds is driven to rotate, in such a manner the pressing blocks below press each other. Since the pressing surfaces of the pressing blocks are curved, a wave shape is formed at a sealed edge of the dough wrapper when pressing.

A method for forming the stuffed food includes the following steps:
step 1: starting a sending motor to convey the dough belt; and starting a stirring motor to continuously stir the stuffing;
step 2: starting a sucking and pushing motor to suck the stuffing when the dough belt is conveyed forward by the sending motor with a dumpling wrapper's length;
step 3: starting a cutter motor to cut the dough belt; and driving the rotating valve by a rotating valve motor by 90 degrees counter-clockwise; and
step 4: starting the sucking and pushing motor to push the stuffing; and driving a rotary table body by a rotary table body motor by 90 degrees;
step 5: resetting the rotating valve by the rotating valve motor; and starting an external cylinder motor and an internal cylinder motor simultaneously to respectively drive the external cylinder and the internal cylinder to move downwardly, so as to push the stuffing into the dough wrappers;
step 6: resetting the external cylinder motor and the internal cylinder motor after pushing the stuffing into the dough wrappers;
step 7: driving the rotary table body by the rotary table body motor by 90 degrees;
step 8: pressing and folding the dumplings for a while before releasing by a pressing motor; and
step 9: driving the rotary table body by the rotary table body motor by 90 degrees;
step 10: moving the dumplings to a discharge station by a discharge motor; and starting a clamping motor to clamp;
step 11: resetting the discharge motor and releasing the clamping motor, and storing the processed dumplings;
step 12: driving the rotary table body by the rotary table body motor by 90 degrees, so as to finish a whole process; and
step 13: backing to the step 1, and repeating.

The sending motor drives the dough feeding rollers of the sending and cutting part;
the stirring motor drives the screw conveyor inside the hopper of the stuffing injection part;
the sucking and pushing motor drives the transverse injecting rod of the stuffing injection part to reciprocate horizontally;
the cutter motor drives the cutter of the sending and cutting part to move up and down, so as to cut the dough wrappers;
the rotating valve motor drives the rotating valve of the stuffing injection part to rotate;
the rotary table body motor drives the rotary table body of the rotary table assembly to rotate; and
the external cylinder motor drives the longitude injecting tube of the stuffing injection part to reciprocate up and down.

The internal motor drives the longitude injecting rod of the stuffing injection part to reciprocate up and down.

The pressing motor drives the pressing mold of the pressing and shaping part to press and release;
the discharge motor drives a clamping structure of the discharge part to move; and
the clamping motor drives the clamping structure of the discharge part to clamp and release.

The above-mentioned motors may be servo motors.

The benefits of the present application are as follows.
1. According to the present application, the opening on the rotary table assembly collects the dough residue and takes full advantage of the space below the rotary table assembly. A recycling bin may be provided below the opening to collect the dough residue, or a processing mechanism may be provided below the opening to process the dough residue for reuse. The above structure does not increase the size of the machine and requires no extra space. The size of present application is compact and is able to be further reduced, which is suitable for family, canteen or small shop.
2. The present application replaces the conventional complicated driving mechanism driven by a single motor with separate motors for different parts. The improvement simplifies the driving mechanism and further reduces the space occupied by the conventional driving mechanism. As a result, the size of the stuffed food forming machine is further reduced, and the saved space may be used to arrange the dough residue collecting mechanism, thereby further optimizing the function of the stuffed food forming machine.
3. According to the present application, the opening may be in any shape, as long as it is convenient for collection of the dough residue. When the distance between an internal side of the shaping molds and a center of the rotary table body is larger than the distance between an internal side of the opening and the center of the rotary table body, no matter the shaping molds are arranged outside the opening or projections of the shaping modes in a vertical direction partially or completely fall within the structure of the opening, the dough residue may conveniently fall into the opening without extra guiding device.
4. The present application adopts the motor to drive the worm screw and tne worm wheel to drive the rotation sleeve and the rotary table body to rotate. The separate driving structure replaces the complicated cam mechanism under the rotary table body and solves the problem of single motor driving all the parts. More space may be used for collection and processing of the dough residue.
5. The guiding plate cooperates with the base to move the catch plate and molding cups on the shaping mold up and down at different positions. Disconnected portions may be provided on both the first guiding rail on the guiding plate and the second guiding rail on the base, namely, the first and second guiding rails are only applied to stations where the heights need to be adjusted. Non-continuously arranged guiding rails reduce cost in material and are simple in structure.
6. Compared to conventional structures, the sending and cutting part of the present application omits an internal pushing device inside the cutter, a conveyor belt and a scraper. The eccentric wheel structure drives the cutter to cut the dough wrappers, which makes the cutting more stable, simplifies the structure and saves space.
7. The dough feeding rollers cooperate with the auxiliary rollers to transport the dough belt without the conveyor belt. Furthermore, with the driven roller above the dough feeding rollers, more frictions are provided to the dough belt, thereby smoothly moving of the dough belt and avoiding sliding.
8. Each part of the present application is driven by an individual driving mechanism and an individual motor, which avoids complicated linkage structures, simplifies the whole structure and reduces the size of the machine. The gear rack driving mechanism, the eccentric wheel driving mechanism and the worm driving mechanism provide smooth transmission to connected structures, which ensures stability.
9. The pressing molds of the present application adopt engaged gears to pressing dough wrapper edges from above. The present application improves the conventional structures and prevents squeeze on other part of the dumplings due to the conventional horizontal pressing or pressing from below, so as to maintain appearance of the dumplings. The motor drives the pressing molds to rotate directly, which simplifies the structure and ensures the forming effect.
10. The present application has fewer controlling points, low failure rate, and low maintenance and use costs.

### BRIEF DESCRIPTION OF THE ACCOMPANYING DRAWINGS

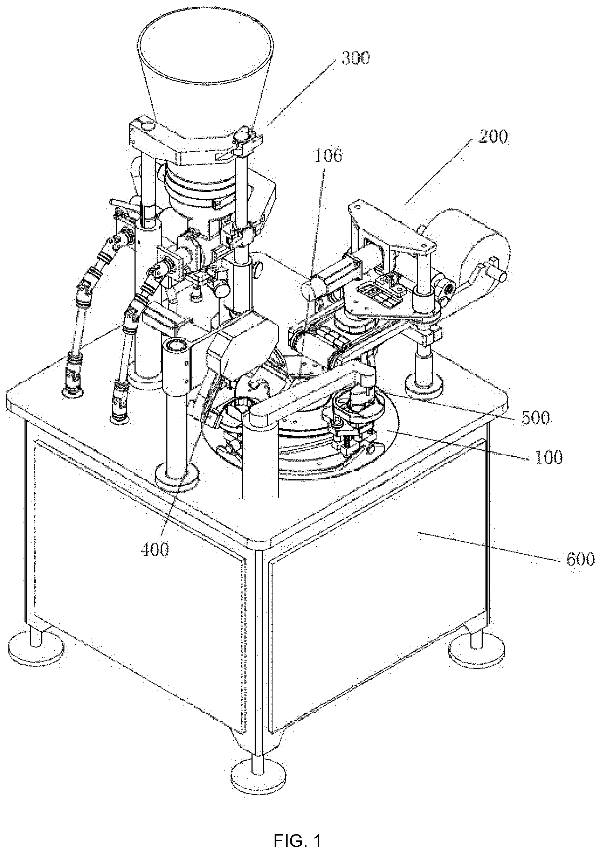

FIG. 1 is a schematic view showing an overall structure of a stuffed food forming machine;

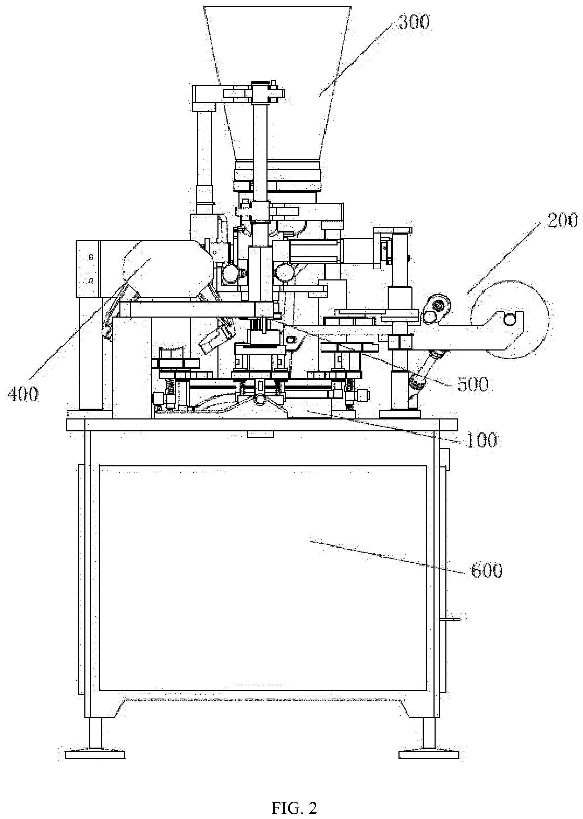

FIG. 2 is a side view showing the overall structure of the stuffed food forming machine;

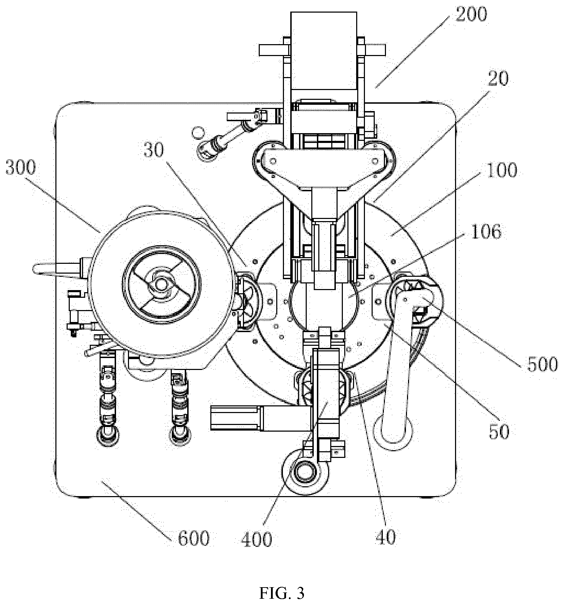

FIG. 3 is a top plan view showing the overall structure of the stuffed food forming machine;

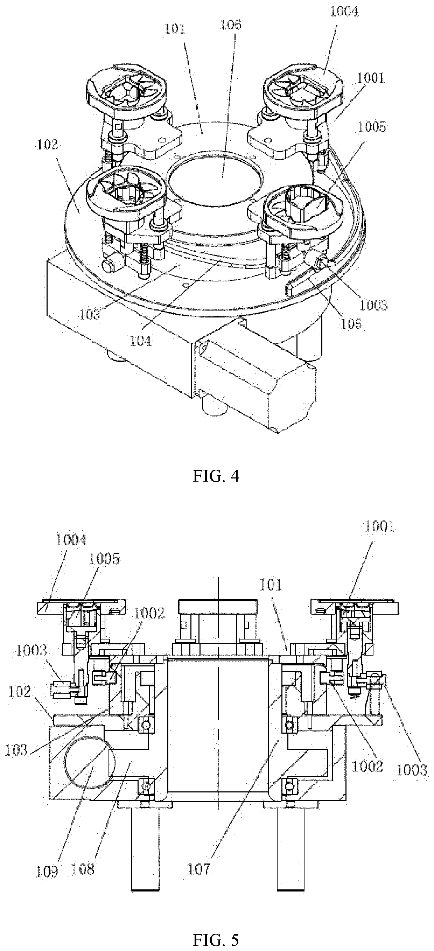

FIG. 4 is a schematic view showing an overall structure of a rotary table assembly;
FIG. 5 is a cross-sectional view of the rotary table assembly;

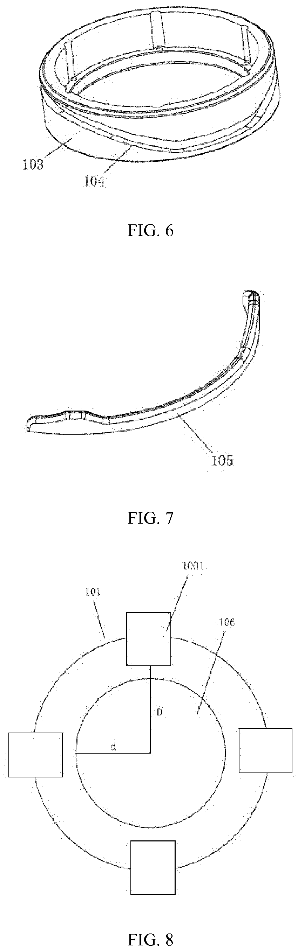

FIG. 6 is a schematic structural view of a guiding plate and a first guiding rail;
FIG. 7 is a schematic structural view of a second guiding rail on a base;
FIG. 8 illustrates that a distance D between an internal side of a shaping mold and a center of the rotary table body is larger than a distance d between an internal side of the opening and the center of the rotary table body;

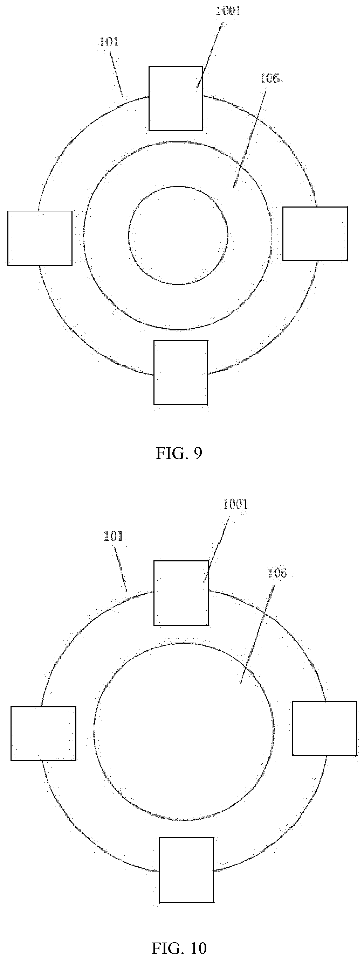

FIG. 9 is a schematic view showing a structure in which the opening is annular;
FIG. 10 illustrates that the shaping mold is located outside the opening;

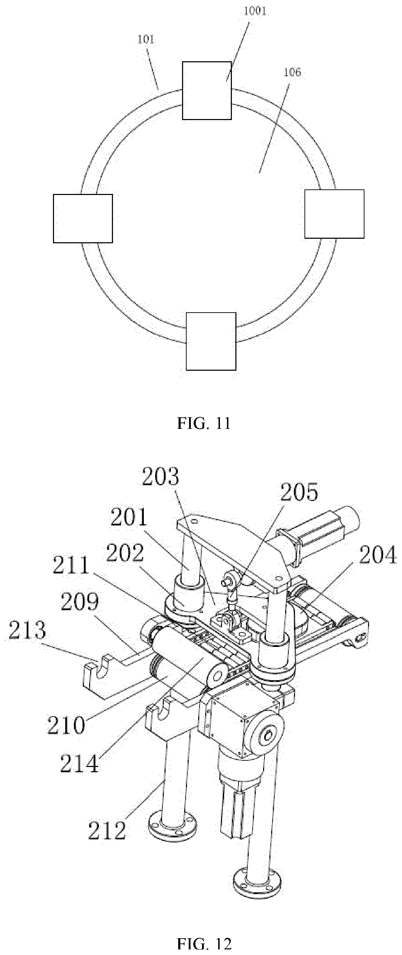

FIG. 11 illustrates that a projection of the shaping mold in a vertical direction partially or completely falls within the opening;
FIG. 12 is a schematic view showing an overall structure of a sending and cutting part;

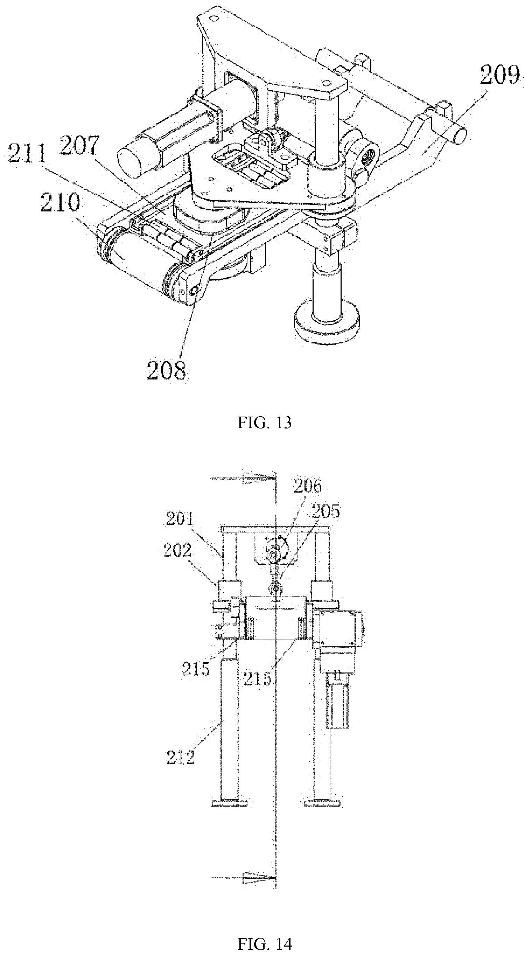

FIG. 13 is a schematic view showing an overall structure of the sending and cutting part with dough feeding rollers;
FIG. 14 is a side view of the sending and cutting part;

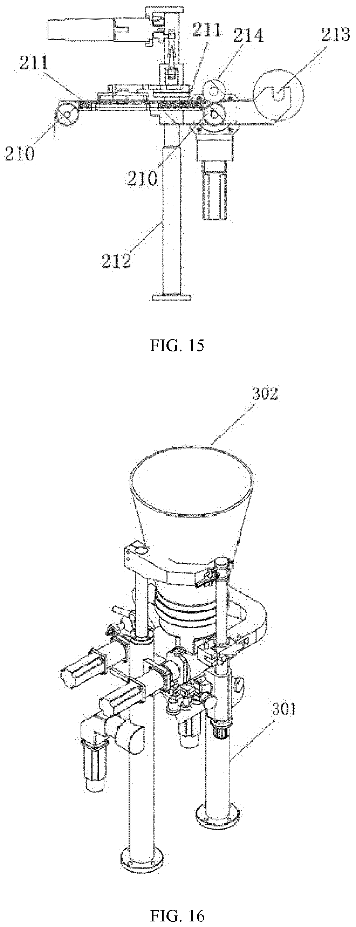

FIG. 15 is a cross-sectional view of the sending and cutting part;
FIG. 16 is a structural schematic view of a stuffing injection part;

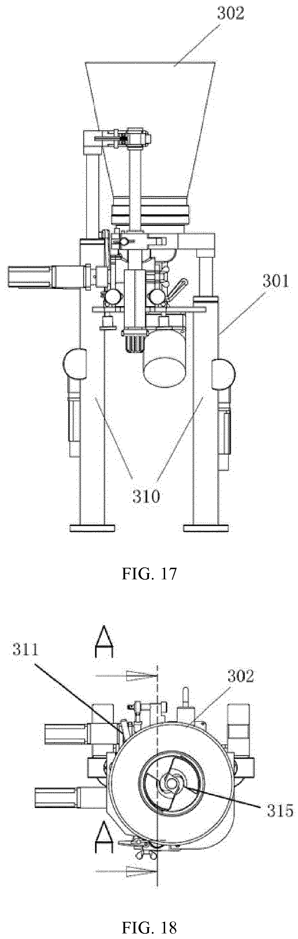

FIG. 17 is a front view of the stuffing injection part;
FIG. 18 is a top plan view of the stuffing injection part;

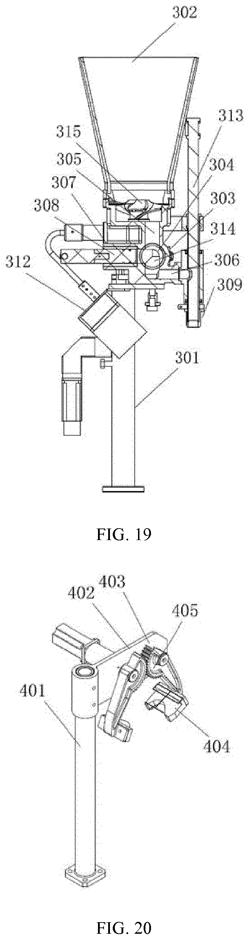

FIG. 19 is a cross-sectional view of the stuffing injection part;
FIG. 20 is a structural schematic view of a pressing and shaping part;

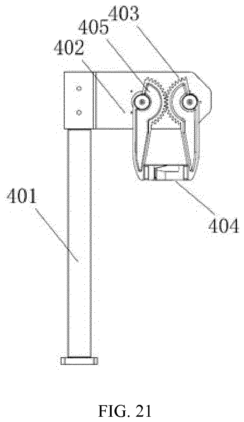

FIG. 21 is a front view of the pressing and shaping part.

Reference numerals:
sending and cutting station 20, stuffing injection station 30, pressing and shaping station 40, discharge station 50, rotary table assembly 100, sending and cutting part 200, stuffing injection part 300, pressing and shaping part 400, discharge part 500, framework 600;
rotary table body 101, base 102, guiding plate 103, first guiding rail 104, second guiding rail 105, opening 106, rotation sleeve 107, worm wheel 108, worm screw 109, shaping mold 1001, first roller 1002, second roller 1003, catch plate 1004, molding cup 1005;
guiding pillar 201, cylinder sleeve 202, cutter holding plate 203, cutter 204, connecting rod 205, eccentric wheel 206, cutting plate 207, cutter hole 208, dough wrapper supporter 209, dough feeding roller 210, auxiliary roller 211, supporting pillar 212, groove 213, driven roller 214, drive belt 215;
supporting frame 301, hopper 302, rotating base 303, rotating valve 304, stuffing inlet tube 305, stuffing outlet tube 306, transverse injecting tube 307, transverse injecting rod 308, longitude injecting tube 309, gear rack driving mechanism 310, eccentric wheel driving mechanism 311, worm driving mechanism 312, longitude injecting rod 313, L-shaped tunnel 314, screw conveyor 315; and
supporting pillar 401, pressing mold 402, gear 403, pressing block 404, rotating plate 405.

### DETAILED DESCRIPTION OF ILLUSTRATIVE EMBODIMENTS

### Embodiment 1

A stuffed food forming machine, which includes a framework 600; a rotary table assembly 100 arranged on the framework 600 and defining an opening 106 configured to collect the dough residue; a sending and cutting station 20; and a stuffing injection station 30. At least the sending and cutting station 20 and the stuffing injection station 30 are arranged around the rotary table assembly 100. A distance between an internal side of a shaping mold 1001 and a center of the rotary table assembly 100 is larger than a distance between an internal side of the opening 106 and the center of the rotary table assembly 100. The stuffed food mentioned in the present application may include stuffed foods such as dumplings, sweet dumplings, buns and Siu-mai. Taking the process of making dumplings as an example, the uncut dough is called a dumpling wrapper dough belt. Wrappers cut from the dumpling wrapper dough belt by the cutter are called dough wrappers. During the cutting process, the remaining dough is called dough residue. When a distance between an internal side of a shaping mold 1001 and a center of the rotary table assembly 100 is larger than a distance between an internal side of the opening 106 and the center of the rotary table assembly 100, the dough residue may easily drop into the opening 106, so as to be collected.

A sending and cutting part 200 is provided at the sending and cutting station 20. A stuffing injection part 300 is provided at the stuffing injection station 30. The sending and cutting part 200 and the stuffing injection part 300 may adopt conventional structures. The sending and cutting station 20 and stuffing injection station 30 are provided around the rotary table assembly 100 while other processing stations may be provided inside the rotary table body or at other positions.

The overall working principle is as follows.

### Step 1: sending and cutting.

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

### Embodiment 2

A stuffed food forming machine, which includes a framework 600; a rotary table assembly 100 arranged on the framework 600 and defining an opening 106 configured to collect the dough residue; a sending and cutting station 20; and a stuffing injection station 30. At least the sending and cutting station 20 and the stuffing injection station 30 are arranged around the rotary table assembly 100. A distance between an internal side of a shaping mold 1001 and a center of the rotary table assembly 100 is larger than a distance between an internal side of the opening 106 and the center of the rotary table assembly 100. The stuffed food mentioned in the present application may include stuffed foods such as dumplings, sweet dumplings, buns and Siu-mai. Taking the process of making dumplings as an example, the uncut dough is called a dumpling wrapper dough belt. Wrappers cut from the dumpling wrapper dough belt by the cutter are called dough wrappers. During the cutting process, the remaining dough is called dough residue. When a distance between an internal side of a shaping mold 1001 and a center of the rotary table assembly 100 is larger than a distance between an internal side of the opening 106 and the center of the rotary table assembly 100, the dough residue may easily drop into the opening 106, so as to be collected.

A sending and cutting part 200 is provided at the sending and cutting station 20. A stuffing injection part 300 is provided at the stuffing injection station 30. The sending and cutting part 200 and the stuffing injection part 300 may adopt conventional structures. The sending and cutting station 20 and stuffing injection station 30 are provided around the rotary table assembly 100 while other processing stations may be provided inside the rotary table body or at other positions.

A pressing and shaping station 40 and a discharge station 50 are arranged in sequence around the rotary table assembly and beside the stuffing injection station 30. Where a pressing and shaping part 400 is provided at the pressing and shaping station 40, and a discharge part 500 is provided at the discharge station 50. The pressing and shaping part 400 and the discharge part 500 may adopt conventional structures.

The overall working principle is as follows.

### Step 1: sending and cutting,

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

Further, the overall working principle may include the following:

### Step 3: pressing and shaping.

The shaping mold 1001 after injecting is driven by the rotary table body 101 to rotate to a pressing and shaping station 40 where the dough wrapper is pressed and shaped.

### Step 4: discharging.

The shaping mold 1001 after pressing and shaping is driven by the rotary table body (101) to rotate to a discharge station 50 where a final product is discharged.

### Embodiment 3

A stuffed food forming machine, which includes a framework 600; a rotary table assembly 100 arranged on the framework 600 and defining an opening 106 configured to collect the dough residue; a sending and cutting station 20; and a stuffing injection station 30. At least the sending and cutting station 20 and the stuffing injection station 30 are arranged around the rotary table assembly 100. A distance between an internal side of a shaping mold 1001 and a center of the rotary table assembly 100 is larger than a distance between an internal side of the opening 106 and the center of the rotary table assembly 100.

The stuffed food mentioned in the present application may include stuffed foods such as dumplings, sweet dumplings, buns and Siu-mai. Taking the process of making dumplings as an example, the uncut dough is called a dumpling wrapper dough belt. Wrappers cut from the dumpling wrapper dough belt by the cutter are called dough wrappers. During the cutting process, the remaining dough is called dough residue. When a distance between an internal side of a shaping mold 1001 and a center of the rotary table assembly 100 is larger than a distance between an internal side of the opening 106 and the center of the rotary table assembly 100, the dough residue may easily drop into the opening 106, so as to be collected.

A sending and cutting part 200 is provided at the sending and cutting station 20. A stuffing injection part 300 is provided at the stuffing injection station 30. The sending and cutting part 200 and the stuffing injection part 300 may adopt conventional structures. The sending and cutting station 20 and stuffing injection station 30 are provided around the rotary table assembly 100 while other processing stations may be provided inside the rotary table body or at other positions.

A pressing and shaping station 40 and a discharge station 50 are arranged in sequence around the rotary table assembly and beside the stuffing injection station 30. Where a pressing and shaping part 400 is provided at the pressing and shaping station 40, and a discharge part 500 is provided at the discharge station 50. The pressing and shaping part 400 and the discharge part 500 may adopt conventional structures.

The overall working principle is as follows.

### Step 1: sending and cutting,

A shaping mold 1001 on a rotary table body 101 is arranged below a sending and cutting station 20. A dough wrapper is cut into a specified shape from a dough belt and falls on the shaping mold 1001 below. A dough residue enters an opening 106 on the rotary table body 101 and is transported downwardly to be collected.

### Step 2: injecting.

The shaping mold 1001 after receiving the dough wrapper is driven by the rotary table body to rotate to a stuffing injection station 30 where the stuffing is injected onto the dough wrapper.

Further, the working principle may include the following:

### Step 3: pressing and shaping.

The shaping mold 1001 after injecting is driven by the rotary table body 101 to rotate to a pressing and shaping station 40 where the dough wrapper is pressed and shaped.

### Step 4: discharging.

The shaping mold 1001 after pressing and shaping is driven by the rotary table body to rotate to a discharge station 50 where a final product is discharged.

A structure of the rotary table assembly 100 is as follows.

The rotary table assembly 100 includes the rotary table body 101 defining the opening 106 configured to collect the dough residue, and a plurality of the shaping molds 1001 evenly distributed on the rotary table body 101. A distance between the internal side of the shaping mold 1001 and a center of the rotary table body 101 is larger than a distance between the internal side of the opening 106 and the center of the rotary table body 101. The opening 106 is a through hole penetrating the rotary table body 101. When a distance between an internal side of a shaping mold 1001 and a center of the rotary table assembly 100 is larger than a distance between an internal side of the opening 106 and the center of the rotary table assembly 100, the dough residue may easily drop into the opening 106, so as to be collected.

The opening 106 is continuously defined on the rotary table body 101, namely, there is no break along the opening, which guarantees a continuous collection of the dough residue when the rotary table body 101 is rotating. The structure of the opening 106 must be continuously arranged to collect the dough residue while the rotary table body 101 is rotating.

When the opening 106 is circular, it may be defined at the center of the rotary table body 101.

When the opening 106 is annular, it may be defined at the center or a center-outward position of the rotary table body 101.

The opening 106 may penetrate an upper surface and a lower surface of the rotary table body 101.

Relative positions of the shaping molds 1001 and the opening 106 are as follows.

Upper surfaces of the plurality of shaping molds 1001 are located above an upper surface of the opening 106, and the plurality of shaping molds 1001 are arranged outside the opening 106.

Or upper surfaces of the plurality of shaping molds 1001 are located above an upper surface of the opening 106, and projections of the plurality of shaping modes 1001 in a vertical direction partially or completely falls within the opening 106.

A structure of the rotary table body 101 is as follows.

The rotary table body 101 is rectangular, a circular or an irregular.

A rotation sleeve 107 connected with a worm wheel 108 is connected to a bottom of the rotary table body 101. The worm wheel 108 is connected with a worm screw 109, and the worm screw 109 is connected with a motor.

A structure of the rail is as follows.

A base 102 is arranged under the rotary table body 101. A guiding plate 103 is arranged between the base 102 and the rotary table body 101, and the guilding plate 103 is a cylinder as a whole. A first guiding rail 104 is defined on an external surface of the guilding plate 103, and the first guiding rail 104 cooperates with a first roller 1002 on a catch plate 1004 on the shaping molds 1001 to move the catch plate 1004 up and down.

The guiding plate 103 is a continuous cylinder.

At least one disconnected portion is defined on the cylinder of the guiding plate 103. The disconnected portion is partly or entirely disconnected. The guiding plate 103 may be provided at stations where structures of the shaping molds 1001 move up and down. The guiding plate 103 is not needed for stations where height will not be adjusted.

A second guiding rail 105 is defined on an edge of the base 102, and the second guiding rail 105 cooperates with a second roller 1003 of the molding cup 1005 on the shaping mold 1001 to move the molding cup 1005 up and down.

A working principle of the rotary table assembly 100 is as follows.

The motor drives the rotary table body 101 to rotate the shaping molds 1001 which are connected to the rotary table body 101. The dough residue after cutting enters the opening 106 on the rotary table body 101, so as to be collected. A base 102 and a guiding plate 103 which are arranged under the rotary table body 101 are separated from the rotary table body and are static during working. A guiding rail is provided on both the base 102 and the guiding plate 103 respectively. Guiding rollers on the shaping molds 1001 are guided by the guiding rail to drive the catch plate 1004 and the molds to move up and down respectively.

A working principle of the rail is as follows.

Specifically, the shaping molds 1001 adopts conventional structure. Each shaping mold 1001 includes a catch plate 1004 connected with a first roller 1002 below through a first connecting rod; and a molding cup 1005 provided in the catch plate 1004 and connected with a second roller 1003 below through a second connecting rod. Since the shaping molds 1001 are rotated with the rotating disc 101 while the guiding plate 103 and the base 102 remain still, the catch plate 1004 moves up and down by the first roller moving along a wave-shaped track in the first guiding rail 104 on the external surface of the guiding plate. The second guiding rail 105 cooperates with the second roller 1003 to move the molding cups 1005 up and down. As a result, different parts of the shaping molds 1001 move up and down at different stations.

A structure of the sending and cutting part 200 is as follows.

The sending and cutting part 200 includes a guiding pillar 201; a cylinder sleeve 202 sleeved on the guiding pillar 201; a cutter holding plate 203 connected with the cylinder sleeve 202 and connected with an eccentric wheel 206 through a connecting rod 205, where the eccentric wheel 206 is driven by a motor directly; a cutter 204 mounted under the cutter holding plate 203; a cutting plate 207 is arranged under the cutter 204; and a cutter hole 208 defined on the cutting plate 207 corresponding to the cutter 204. The cutter hole 208 cooperates with the cutter 204 to cut the dough wrappers.

The sending and cutting part 200 further includes two dough wrapper supporters 209 which are laterally arranged; two dough feeding rollers 210 mounted between the two dough wrapper supporters 209 in sequence and driven directly by a motor; a plurality of auxiliary rollers 211 arranged between the two dough feeding rollers 210, where the cutting plate 207 is arranged between the plurality of auxiliary rollers 211 and no conveyor belt which is essential to the conventional machines is needed; a supporting pillar 212 provided on an external side of each dough wrapper supporters 209 and provided with the guiding pillar 201 on a top end; a groove 213 defined on an external end of each dough wrapper supporter 209 and configured to accommodate a dough belt roller, where the dough belt is wound to rolls by the dough belt rollers which are placed in the grooves 213; a driven roller 214 provided above the dough feeding roller 210; and a drive belt 215 connected the two dough feeding rollers to rotate the two dough feeding rollers synchronously.

A working principle of sending and cutting is as follows.

The dough belt is driven by the dough feeding rollers 210 to move toward the cutter 204. When the dough belt is conveyed below the cutter 204, the motor directly drives the eccentric wheel 206 to rotate, in such a manner the connecting rod 205 is rotated with the eccentric wheel 206. The cutter holding plate 203 is connected with and driven by the connecting rod 205 and the cylinder sleeve 202 to move up and down along the guiding pillar 201. The cutter 204 moves up and down with the cutter holding plate 203 and cooperates with the cutter hole 208 on the cutting plate 207, so as to cut the dough wrapper.

A structure of the stuffing injection part 300 is as follows.

The stuffing injection part 300 includes a supporting frame 301; a hopper 302 arranged on the supporting frame; a rotating base 303 arranged on the supporting frame; a rotating valve 304 provided inside the rotating base 303 and driven directly by a motor to rotate; a stuffing inlet tube 305 connecting the hopper 302 and a top end of the rotating base 303; a stuffing outlet tube 306 connected below the rotating base 303; a transverse injecting tube 307 arranged on a lateral side of the rotating base 303; a transverse injecting rod 308 provided inside the transverse injecting tube 307; a longitude injecting tube 309 provided at an outlet of the stuffing outlet tube 306; a gear rack driving mechanism 310 driving the longitude injecting tube to move up and down and provided inside the supporting frame 301; an eccentric wheel driving mechanism 311 driving the transverse injecting rod 308 to move horizontally; a screw conveyor 315 provided inside the hopper 302; a worm driving mechanism 312 driving the screw conveyor 315 to rotate; a longitude injecting rod 313 provided inside the longitude injecting tube 309 and driven by the gear rack driving mechanism 310 to move up and down inside the longitude injecting tube 309 to push the stuffing downwardly from the outlet of the stuffing outlet tube 306; and an L-shaped tunnel 314 provided inside the rotating valve 304. Where the gear rack driving mechanism 310, the eccentric wheel driving mechanism 311 and the worm driving mechanism 312 are driven separately by different motors, which means each driving mechanism is driven by a different motor.

A working principle of the stuffing injection part 300 is as follows.

The motor drives the worm driving mechanism to rotate, and the worm driving mechanism drives the screw conveyor 315 inside the hopper 302 to stir stuffing. The stuffing is conveyed to the rotating valve 304 after being stirred by the screw conveyor 315. The motor directly drives the rotating valve 304 to rotate by 90 degrees counter-clockwise after the rotating valve 304 is filled with the stuffing. Then the motor drives the eccentric wheel driving mechanism 311 to drive the transverse injecting rod 308 to move horizontally to push the stuffing out from a bottom of the rotating valve 304 and move the stuffing to an outlet of the stuffing outlet tube 306. The motor drives the gear rack driving mechanism 310 to drive the longitude injecting rod 313 to move up and down to push down the stuffing from the outlet of the stuffing outlet tube 306. The motor drives the gear rack driving mechanism 310 to drive the longitude injecting tube 309 to move down to push the stuffing into the dough wrapper.

A structure of the pressing and shaping part 400 is as follows.

The pressing and shaping part 400 includes a supporting pillar 401; a pair of pressing molds 402 fixed on the supporting pillar 401, where a top of at least one of the pressing molds 402 is connected with a motor; two gears 403 provided on top ends of the pair of pressing molds 402 respectively, where the two gear 403 are engaged with each other; two pressing blocks 404 provided on two bottom ends of the pair of pressing molds 402 respectively, where the two pressing block 404 is two, and the two pressing blocks 404 are opposite to each other, and pressing surfaces of the pressing blocks 404 are curved, and one of the pressing blocks 404 is laterally concave, and the other of the pressing blocks 404 is laterally convex; and two semicircle rotating plates 405, where the two gears are provided on respectively, where curved surfaces of the two rotating plates 405 are opposite to each other.

A working principle of the pressing and shaping part 400 is as follows.

The motor drives the top of one of the pressing molds 402 to rotate. Since the top ends of the pressing molds 402 are engaged with each other, the top of the other of the pressing molds 402 is driven to rotate, in such a manner the pressing blocks 404 below press each other. Since the pressing surfaces of the pressing blocks 404 are curved, a wave shape is formed at a sealed edge of the dough wrapper when pressing.

A control method for forming the stuffed food includes the following steps:
step 1: starting a sending motor to convey the dough belt; and starting a stirring motor to continuously stir the stuffing;
step 2: starting a sucking and pushing motor to suck the stuffing when the dough belt is conveyed forward by the sending motor with a dumpling wrapper' s length;
step 3: starting a cutter motor to cut the dough belt; and driving the rotating valve 304 by a rotating valve motor by 90 degrees counter-clockwise; and
step 4: starting the sucking and pushing motor to push the stuffing; and driving a rotary table by a rotary table motor by 90 degrees;
step 5: resetting the rotating valve 304 by the rotating valve motor; and starting an external cylinder motor and an internal cylinder motor simultaneously to respectively drive the external cylinder and the internal cylinder to move downwardly, so as to push the stuffing into the dough wrappers;
step 6: resetting the external cylinder motor and the internal cylinder motor after pushing the stuffing into the dough wrappers;
step 7: driving the rotary table by the rotary table motor by 90 degrees;
step 8: pressing and folding the dumplings for a while before releasing by a pressing motor; and
step 9: driving the rotary table by the rotary table motor by 90 degrees;
step 10: moving the dumplings to a discharge station by a discharge motor; and starting a clamping motor to clamp;
step 11: resetting the discharge motor and releasing the clamping motor, and storing the processed dumplings;
step 12: driving the rotary table by the rotary table motor by 90 degrees, so as to finish a whole process; and
step 13: backing to the step 1, and repeating.

The sending motor drives the dough feeding rollers 210 of the sending and cutting part 200;
the stirring motor drives the screw conveyor 315 inside the hopper 302 of the stuffing injection part 300;
the sucking and pushing motor drives the transverse injecting rod 308 of the stuffing injection part 300 to reciprocate horizontally;
the cutter motor drives the cutter 204 of the sending and cutting part 200 to move up and down, so as to cut the dough wrappers;
the rotating valve motor drives the rotating valve 304 of the stuffing injection part 300 to rotate;
the rotary table motor drives the rotary table body 101 of the rotary table assembly 100 to rotate; and
the external cylinder motor drives the longitude injecting tube 309 of the stuffing injection part 300 to reciprocate up and down.

The internal motor drives the longitude injecting rod 313 of the stuffing injection part 300 to reciprocate up and down.

The pressing motor drives the pressing mold 402 of the pressing and shaping part 400 to press and release;
the discharge motor drives a clamping structure of the discharge part 500 to move; and
the clamping motor drives the clamping structure of the discharge part 500 to clamp and release.

The above-mentioned motors may be servo motors.

According to the present application, the opening 106 on the rotary table assembly 100 collects the dough residue and takes full advantage of the space below the rotary table assembly 100. A recycling bin may be provided below the opening 106 to collect the dough residue, or a processing mechanism may be provided below the opening 106 to process the dough residue for reuse. The above structure does not increase the size of the machine and requires no extra space. The size of present application is compact and is able to be further reduced, which is suitable for family, canteen or small shop.

The present application replaces the conventional complicated driving mechanism driven by a single motor with separate motors for different parts. The improvement simplifies the driving mechanism and further reduces the space occupied by the conventional driving mechanism. As a result, the size of the stuffed food forming machine is further reduced, and the saved space may be used to arrange the dough residue collecting mechanism, thereby further optimizing the function of the stuffed food forming machine.

According to the present application, the opening 106 may be in any shape, as long as it is convenient for collection of the dough residue. When the distance between an internal side of a shaping mold 1001 and a center of the rotary table body 101 is larger than the distance between an internal side of the opening 106 and the center of the rotary table assembly 100, no matter the shaping molds 1001 are arranged outside the opening 106 or projections of the shaping modes 1001 in a vertical direction partially or completely fall within the structure of the opening 106, the dough residue may conveniently fall into the opening 106 without extra guiding device.

The present application adopts the motor to drive the worm screw 109 and the worm wheel 108 to drive the rotation sleeve 107 and the rotary table body 101 to rotate. The separate driving structure replaces the complicated cam mechanism under the rotary table body 101 and solves the problem of single motor driving all the parts. More space may be used for collection and processing of the dough residue.

The guiding plate 103 cooperates with the base 102 to move the catch plate 1004 and molding cups 1005 on the shaping mold 1001 up and down at different positions. Disconnected portions may be provided on both the first guiding rail 104 on the guiding plate 103 and the second guiding rail 105 on the base 102, namely, the first guiding rail 104 and second guiding rail 105 are only applied to stations where the heights need to be adjusted. Non-continuously arranged guiding rails reduce cost in material and are simple in structure.

Compared to conventional structures, the sending and cutting part 200 of the present application omits an internal pushing device inside the cutter 204, a conveyor belt and a scraper. The eccentric wheel structure drives the cutter 204 to cut the dough wrappers, which makes the cutting more stable, simplifies the structure and saves space.

The dough feeding rollers 210 cooperate with the auxiliary rollers 211 to transport the dough belt without the conveyor belt. Furthermore, with the driven roller 214 above the dough feeding rollers 210, more frictions are provided to the dough belt, thereby smoothly moving of the dough belt and avoiding sliding.

Each part of the present application is driven by an individual driving mechanism and an individual motor, which avoids complicated linkage structures, simplifies the whole structure and reduces the size of the machine. The gear rack driving mechanism 310, the eccentric wheel driving mechanism 311 and the worm driving mechanism provide smooth transmission to connected structures, which ensures stability.

The pressing molds 402 of the present application adopt engaged gears 403 to pressing dough wrapper edges from above. The present application improves the conventional structures and prevents squeeze on other part of the dumplings due to the conventional horizontal pressing or pressing from below, so as to maintain appearance of the dumplings. The motor drives the pressing molds 402 to rotate directly, which simplifies the structure and ensures the forming effect.

## Claims

1. A stuffed food forming machine comprising:
a rotary table assembly (100) ;
a sending and cutting station (20); and
a stuffing injection station (30),
wherein at least the sending and cutting station (20) and the stuffing injection station (30) are arranged around the rotary table assembly (100), and
**characterized in that** the rotary table assembly (100) defines an opening (106) configured to collect the dough residue, wherein a distance between an internal side of a shaping mold (1001) rotated together with the rotary table assembly (100) and a center of the rotary table assembly (100) is larger than a distance between an internal side of the opening (106) and the center of the rotary table assembly (100).

2. The stuffed food forming machine of claim 1, **characterized in that**,
a sending and cutting part (200) is provided at the sending and cutting station (20), and
a stuffing injection part (300) is provided at the stuffing injection station (30).

3. The stuffed food forming machine of claim 2, **characterized in that**,
a pressing and shaping station (40) and a discharge station (50) are arranged in sequence around the rotary table assembly (100) and beside the stuffing injection station (30), and
wherein a pressing and shaping part (400) is provided at the pressing and shaping station (40), and
wherein a discharge part (500) is provided at the discharge station (50).

4. The stuffed food forming machine according to any one of claims 1 to 3, **characterized in that** the rotary table assembly (100) comprises:
a rotary table body (101) defining the opening (106) configured to collect the dough residue; and
a plurality of the shaping molds (1001) evenly distributed on the rotary table body (101),
wherein a distance between the internal side of the shaping mold (1001) and a center of the rotary table body (101) is larger than a distance between the internal side of the opening (106) and the center of the rotary table body (101).

5. The stuffed food forming machine of claim 4, **characterized in that**,
the opening (106) is continuously defined on the rotary table body (101).

6. The stuffed food forming machine of claim 5, **characterized in that**,
the opening (106) is circular or annular.

7. The stuffed food forming machine of claim 4, **characterized in that**,
the opening (106) is configured to penetrate an upper surface and a lower surface of the rotary table body (101).

8. The stuffed food forming machine of claim 4, **characterized in that**,
upper surfaces of the plurality of shaping molds (1001) are located above an upper surface of the opening (106), and
wherein the plurality of shaping molds (1001) are arranged outside the opening (106).

9. The stuffed food forming machine of claim 4, **characterized in that**,
upper surfaces of the plurality of shaping molds (1001) are located above an upper surface of the opening (106), and
projections of the plurality of shaping modes (1001) in a vertical direction partially or completely falls within the opening (106).

10. The stuffed food forming machine of claim 4, **characterized in that**,
a rotation sleeve (107) connected with a worm wheel (108) is connected to a bottom of the rotary table body (101),
wherein the worm wheel (108) is connected with a worm screw (109), and the worm screw (109) is connected with a motor.

11. The stuffed food forming machine of claim 4, **characterized in that** the rotary table assembly (100) further comprises:
a base (102) arranged under the rotary table body (101);
a guiding plate (103) arranged between the base (102) and the rotary table body (101),
wherein the guiding plate (103) is a cylinder as a whole;
a first guiding rail (104) defined on an external surface of the guiding plate (103); and
a second guiding rail (105) defined on an outer edge of the base (102).

12. The stuffed food forming machine of claim 11, **characterized in that**,
the guiding plate (103) is a continuous cylinder.

13. The stuffed food forming machine of claim 11, **characterized in that**,
at least one disconnected portion is defined on the guiding plate (103), and
wherein the disconnected portion is partly or entirely disconnected.

14. The stuffed food forming machine according to any one of claims 1 to 3, **characterized in that** the sending and cutting part (200) comprises:
a guiding pillar (201);
a cylinder sleeve (202) sleeved on the guiding pillar (201);
a cutter holding plate (203) connected with the cylinder sleeve (202) and connected with an eccentric wheel (206) through a connecting rod (205);
wherein the eccentric wheel (206) is driven by a motor directly;
a cutter (204) mounted under the cutter holding plate (203);
a cutting plate (207) arranged under the cutter (204); and
a cutter hole (208) defined on the cutting plate (207) corresponding to the cutter (204).

15. The stuffed food forming machine of claim 14, **characterized in that** the sending and cutting part (200) further comprises:
two dough wrapper supporters (209) laterally arranged;
two dough feeding rollers (210) mounted between the two dough wrapper supporters (209) in sequence and driven directly by a motor;
a plurality of auxiliary rollers (211) arranged between the two dough feeding rollers (210);
wherein the cutting plate (207) is arranged between the plurality of auxiliary rollers (211);
a supporting pillar (212) provided on an external side of each dough wrapper supporter (209) and provided with the guiding pillar (201) on a top end;
a driven roller (214) provided above the dough feeding roller (210); and
a drive belt (215) connected the two dough feeding rollers (210).

16. The stuffed food forming machine according to any one of claims 1 to 3, **characterized in that** the stuffing injection part (300) comprises:
a supporting frame (301);
a hopper (302) arranged on the supporting frame (301);
a rotating base (303) arranged on the supporting frame (301);
a rotating valve (304) provided inside the rotating base (303) and driven directly by a motor to rotate;
a stuffing inlet tube (305) connecting the hopper (302) and a top end of the rotating base (303);
a stuffing outlet tube (306) connected below the rotating base (303);
a transverse injecting tube (307) arranged on a lateral side of the rotating base (303);
a transverse injecting rod (308) provided inside the transverse injecting tube (307);
a longitude injecting tube (309) provided at an outlet of the stuffing outlet tube (306);
a gear rack driving mechanism (310) driving the longitude injecting tube (309) to move up and down;
an eccentric wheel driving mechanism (311) driving the transverse injecting rod (308) to move horizontally;
a screw conveyor (315) provided inside the hopper (302); and
a worm driving mechanism (312) driving the screw conveyor (315) to rotate.

17. The stuffed food forming machine of claim 16, **characterized in that** the stuffing injection part (300) further comprises:
a longitude injecting rod (313) provided inside the longitude injecting tube (309) and driven by the gear rack driving mechanism (310) to move up and down inside the longitude injecting tube (309); and
an L-shaped tunnel (314) provided inside the rotating valve (304),
wherein the gear rack driving mechanism (310), the eccentric wheel driving mechanism (311) and the worm driving mechanism (312) are driven separately by different motors; and
wherein the gear rack driving mechanism (310) is provided inside the supporting frame (301).

18. The stuffed food forming machine according to any one of claims 1 to 3, **characterized in that** the pressing and shaping part (400) comprises:
a supporting pillar (401);
a pair of pressing molds (402) fixed on the supporting pillar (401);
wherein a top of at least one of the pressing molds (402) is connected with a motor;
two gears (403) provided on top ends of the pair of pressing molds (402) respectively;
wherein the two gears (403) are engaged with each other;
two pressing blocks (404) provided on two bottom ends of the pair of pressing molds (402) respectively;
wherein the two pressing blocks (404) are opposite to each other; and
wherein pressing surfaces of the pressing blocks (404) are curved; and
wherein one of the pressing blocks (404) is laterally concave, and the other of the pressing blocks (404) is laterally convex; and
two semicircle rotating plates (405) where the two gears (403) are provided on respectively,
wherein curved surfaces of the two rotating plates (405) are opposite to each other.

## Patentansprüche

1. Formmaschine für gefüllte Lebensmittel, umfassend:
eine Drehtischanordnung (100);
eine Sende- und Schneidestation (20);
und eine Füllinjektionsstation (30),
wobei zumindest die Sende- und Schneidstation (20) und die Fülleinspritzstation (30) um die Drehtischanordnung (100) herum angeordnet sind, und **dadurch gekennzeichnet, dass** die Drehtischanordnung (100) eine Öffnung (106) definiert, die konfiguriert ist, um die Teigreste zu sammeln, wobei ein Abstand zwischen einer Innenseite einer zusammen mit der Drehtischanordnung (100) gedrehten Formgebungsform (1001) und einer Mitte der Drehtischanordnung (100) größer ist als ein Abstand zwischen einer Innenseite der Öffnung (106) und die Mitte der Drehtischanordnung (100).

2. Formmaschine für gefüllte Lebensmittel nach Anspruch 1, **dadurch gekennzeichnet, dass** ein Sende- und Schneideteil (200) an der Sende- und Schneidestation (20) vorgesehen ist, und an der Füllinjektionsstation (30) ein Füllinjektionsteil (300) vorgesehen ist.

3. Formmaschine für gefüllte Lebensmittel nach Anspruch 2, **dadurch gekennzeichnet, dass** eine Press- und Formstation (40) und eine Abführstation (50) nacheinander um die Drehtischanordnung (100) und neben der Fülleinspritzstation (30) angeordnet sind, und wobei ein Press- und Formteil (400) an der Press- und Formstation (40) bereitgestellt wird, und wobei ein Entladeteil (500) an der Entladestation (50) bereitgestellt ist.

4. Formmaschine für gefüllte Lebensmittel nach einem der Ansprüche 1 bis 3, **dadurch gekennzeichnet, dass** die Drehtischanordnung (100) umfasst: einen Drehtischkörper (101), der die Öffnung (106) definiert, die konfiguriert ist, um die Teigreste zu sammeln; und eine Vielzahl der formgebenden Formen (1001) gleichmäßig auf dem Drehtischkörper (101) verteilt, wobei ein Abstand zwischen der Innenseite der Formgebungsform (1001) und einer Mitte des Drehtischkörpers (101) größer ist als ein Abstand zwischen der Innenseite der Öffnung (106) und der Mitte des Drehtischkörpers (101 .). ).

5. Formmaschine für gefüllte Lebensmittel nach Anspruch 4, **dadurch gekennzeichnet, dass** die Öffnung (106) am Drehtischkörper (101) durchgehend definiert ist.

6. Formmaschine für gefüllte Lebensmittel nach Anspruch 5, **dadurch gekennzeichnet, dass** die Öffnung (106) kreisförmig oder ringförmig ist.

7. Formmaschine für gefüllte Lebensmittel nach Anspruch 4, **dadurch gekennzeichnet, dass** die Öffnung (106) so konfiguriert ist, dass sie eine obere Fläche und eine untere Fläche des Drehtischkörpers (101) durchdringt.

8. Formmaschine für gefüllte Lebensmittel nach Anspruch 4, **dadurch gekennzeichnet, dass** obere Oberflächen der Vielzahl von Formgebungsformen (1001) über einer oberen Oberfläche der Öffnung (106) angeordnet sind, und wobei die mehreren Formgebungsformen (1001) außerhalb der Öffnung (106) angeordnet sind.

9. Formmaschine für gefüllte Lebensmittel nach Anspruch 4, **dadurch gekennzeichnet, dass** obere Oberflächen der Vielzahl von Formgebungsformen (1001) über einer oberen Oberfläche der Öffnung (106) angeordnet sind, und Projektionen der Vielzahl von Formgebungsmodi (1001) in einer vertikalen Richtung fallen teilweise oder vollständig in die Öffnung (106).

10. Formmaschine für gefüllte Lebensmittel nach Anspruch 4, **dadurch gekennzeichnet, dass** eine mit einem Schneckenrad (108) verbundene Drehhülse (107) mit einem Boden des Drehtischkörpers (101) verbunden ist, wobei das Schneckenrad (108) mit einer Schneckenschraube (109) verbunden ist und die Schneckenschraube (109) mit einem Motor verbunden ist.

11. Formmaschine für gefüllte Lebensmittel nach Anspruch 4, **dadurch gekennzeichnet, dass** die Drehtischanordnung (100) ferner umfasst: eine Basis (102), die unter dem Drehtischkörper (101) angeordnet ist; eine Führungsplatte (103), die zwischen der Basis (102) und dem Drehtischkörper (101) angeordnet ist, wobei die Führungsplatte (103) insgesamt ein Zylinder ist;
eine erste Führungsschiene (104), die auf einer Außenfläche der Führungsplatte (103) definiert ist;
Und eine zweite Führungsschiene (105), die an einer Außenkante der Basis (102) definiert ist.

12. Formmaschine für gefüllte Lebensmittel nach Anspruch 11, **dadurch gekennzeichnet, dass** die Führungsplatte (103) ein durchgehender Zylinder ist.

13. Formmaschine für gefüllte Lebensmittel nach Anspruch 11, **dadurch gekennzeichnet, dass** mindestens ein getrennter Abschnitt auf der Führungsplatte (103) definiert ist, und wobei der getrennte Abschnitt teilweise oder vollständig getrennt ist.

14. Formmaschine für gefüllte Lebensmittel nach einem der Ansprüche 1 bis 3, **dadurch gekennzeichnet, dass** der Sende- und Schneideteil (200) umfasst:
eine Führungssäule (201);
eine Zylinderhülse (202), die auf der Führungssäule (201) aufgesetzt ist;
eine Schneidehalteplatte (203), die mit der Zylinderhülse (202) verbunden und mit einem Exzenterrad (206) über eine Pleuelstange (205) verbunden ist;
wobei das Exzenterrad (206) direkt von einem Motor angetrieben wird;
eine Schneidevorrichtung (204), die unter der Schneidevorrichtungshalteplatte (203) angebracht ist;
eine Schneidplatte (207), die unter dem Schneider (204) angeordnet ist; und
ein Schneideloch (208), das auf der Schneideplatte (207) definiert ist, das dem Schneidegerät (204) entspricht.

15. Formmaschine für gefüllte Lebensmittel nach Anspruch 14, **dadurch gekennzeichnet, dass** der Sende- und Schneideteil (200) ferner umfasst:
zwei seitlich angeordnete Teighüllenträger (209);
zwei Teigzuführwalzen (210), die nacheinander zwischen den beiden Teighüllenträgern (209) montiert sind und direkt von einem Motor angetrieben werden;
eine Vielzahl von Hilfswalzen (211), die zwischen den zwei Teigzuführwalzen (210) angeordnet sind;
wobei die Schneidplatte (207) zwischen den mehreren Hilfsrollen (211) angeordnet ist;
eine Stützsäule (212), die an einer Außenseite jedes Teighüllenträgers (209) vorgesehen ist und mit der Führungssäule (201) an einem oberen Ende versehen ist;
eine angetriebene Walze (214), die über der Teigzuführwalze (210) vorgesehen ist; und einen Antriebsriemen (215), der die beiden Teigzuführwalzen (210) verbindet.

16. Formmaschine für gefüllte Lebensmittel nach einem der Ansprüche 1 bis 3, **dadurch gekennzeichnet, dass** das Fülleinspritzteil (300) umfasst:
einen Stützrahmen (301);
einen Trichter (302), der auf dem Tragrahmen (301) angeordnet ist;
eine drehbare Basis (303), die auf dem Tragrahmen (301) angeordnet ist;
ein Drehventil (304), das innerhalb der Drehbasis (303) vorgesehen ist und direkt von einem Motor angetrieben wird, um sich zu drehen;
ein Fülleinlassrohr (305), das den Trichter (302) und ein oberes Ende der rotierenden Basis (303) verbindet;
ein Füllauslassrohr (306), das unterhalb der rotierenden Basis (303) angeschlossen ist;
ein Quereinspritzrohr (307), das an einer seitlichen Seite der rotierenden Basis (303) angeordnet ist;
eine Quereinspritzstange (308), die innerhalb des Quereinspritzrohrs (307) vorgesehen ist;
ein Längseinspritzrohr (309), das an einem Auslass des Füllauslassrohrs (306) vorgesehen ist;
einen Zahnstangenantriebsmechanismus (310), der das Längseinspritzrohr (309) antreibt, um sich nach oben und unten zu bewegen;
einen exzentrischen Radantriebsmechanismus (311), der die Quereinspritzstange (308) antreibt, um sich horizontal zu bewegen;
einen Schneckenförderer (315), der innerhalb des Trichters (302) vorgesehen ist; und
einen Schneckenantriebsmechanismus (312), der den Schneckenförderer (315) zum Drehen antreibt.

17. Formmaschine für gefüllte Lebensmittel nach Anspruch 16, **dadurch gekennzeichnet, dass** der Fülleinspritzteil (300) ferner umfasst:
eine Längseinspritzstange (313), die innerhalb des Längeneinspritzrohrs (309) vorgesehen ist und durch den Zahnstangenantriebsmechanismus (310) angetrieben wird, um sich innerhalb des Längeneinspritzrohrs (309) auf und ab zu bewegen; und
einen L-förmigen Tunnel (314), der innerhalb des Drehventils (304) vorgesehen ist,
wobei der Zahnstangenantriebsmechanismus (310), der Exzenterrad Antriebsmechanismus (311) und der Schneckenantriebsmechanismus (312) getrennt durch unterschiedliche Motoren angetrieben werden; und
wobei der Zahnstangenantriebsmechanismus (310) innerhalb des Tragrahmens (301) vorgesehen ist.

18. Formmaschine für gefüllte Lebensmittel nach einem der Ansprüche 1 bis 3, **dadurch gekennzeichnet, dass** das Press- und Formteil (400) umfasst:
eine Stützsäule (401);
ein Paar Pressformen (402), die an der Stützsäule (401) befestigt sind;
wobei eine Oberseite von mindestens einer der Pressformen (402) mit einem Motor verbunden ist;
zwei Zahnräder (403), die jeweils an den oberen Enden des Paars von Pressformen (402) vorgesehen sind;
wobei die zwei Zahnräder (403) miteinander in Eingriff stehen;
zwei Preßblöcke (404), die jeweils an zwei unteren Enden des Paars Pressformen (402) vorgesehen sind;
wobei die beiden Pressblöcke (404) einander gegenüberliegen;
und wobei Pressflächen der Pressblöcke (404) gekrümmt sind; und wobei einer der Druckblöcke (404) seitlich konkav ist und der andere der Druckblöcke (404) seitlich konvex ist;
und zwei halbkreisförmige Drehplatten (405), auf denen jeweils die beiden Zahnräder (403) vorgesehen sind, wobei gekrümmte Oberflächen der zwei rotierenden Platten (405) einander gegenüberliegen.

## Revendications

1. Machine de formage d'aliments farcis comprenant:
un ensemble de table rotative (100);
une station d'envoi et de découpe (20);
Et un poste d'injection de rembourrage (30),
dans lequel au moins le poste d'envoi et de découpe (20) et le poste d'injection de rembourrage (30) sont disposés autour de l'ensemble de table rotative (100), et
**caractérisé en ce que** l'ensemble de table rotative (100) définit une ouverture (106) configurée pour collecter le résidu de pâte, dans lequel une distance entre un côté interne d'un moule de formage (1001) tourné avec l'ensemble de table rotative (100) et un centre de l'ensemble de table rotative (100) est plus grande qu'une distance entre un côté interne de l'ouverture (106) et le centre de l'ensemble de table rotative (100).

2. Machine de formage d'aliments farcis selon la revendication 1, **caractérisée en ce que**, une partie d'envoi et de coupe (200) est prévue au poste d'envoi et de coupe (20), et une partie d'injection de rembourrage (300) est prévue au poste d'injection de rembourrage (30).

3. Machine de formage d'aliments farcis selon la revendication 2, **caractérisée en ce que**, un poste de pressage et de mise en forme (40) et un poste de déchargement (50) sont disposés en séquence autour de l'ensemble de table rotative (100) et à côté du poste d'injection de rembourrage (30), et dans lequel une partie de pressage et de formage (400) est prévue au poste de pressage et de formage (40), et dans lequel une partie de décharge (500) est prévue au poste de décharge (50).

4. Machine de formage d'aliments farcis selon l'une quelconque des revendications 1 à 3, **caractérisée en ce que** l'ensemble à table rotative (100) comprend: un corps de table rotative (101) définissant l'ouverture (106) configurée pour collecter le résidu de pâte; et une pluralité de moules de formage (1001) uniformément répartis sur le corps de table rotative (101), dans lequel une distance entre le côté interne du moule de formage (1001) et un centre du corps de table rotative (101) est plus grande qu'une distance entre le côté interne de l'ouverture (106) et le centre du corps de table rotative (101 ).

5. Machine de formage d'aliments farcis selon la revendication 4, **caractérisée en ce que**, l'ouverture (106) est définie en continu sur le corps de table rotative (101).

6. Machine de formage d'aliments farcis selon la revendication 5, **caractérisée en ce que**, l'ouverture (106) est circulaire ou annulaire.

7. Machine de formage d'aliments farcis selon la revendication 4, **caractérisée en ce que**, l'ouverture (106) est configurée pour pénétrer une surface supérieure et une surface inférieure du corps de table rotative (101).

8. Machine de formage d'aliments farcis selon la revendication 4, **caractérisée en ce que**, les surfaces supérieures de la pluralité de moules de formage (1001) sont situées au-dessus d'une surface supérieure de l'ouverture (106), et dans lequel la pluralité de moules de formage (1001) est disposée à l'extérieur de l'ouverture (106).

9. Machine de formage d'aliments farcis selon la revendication 4, **caractérisée en ce que**, les surfaces supérieures de la pluralité de moules de formage (1001) sont situées au-dessus d'une surface supérieure de l'ouverture (106), et les projections de la pluralité de modes de mise en forme (1001) dans une direction verticale tombent partiellement ou complètement à l'intérieur de l'ouverture (106).

10. Machine de formage d'aliments farcis selon la revendication 4, **caractérisée en ce que**, un manchon de rotation (107) relié à une roue à vis sans fin (108) est relié à un fond du corps de table rotative (101), dans lequel la roue à vis (108) est reliée à une vis sans fin (109) et la vis sans fin (109) est reliée à un moteur.

11. Machine de formage d'aliments farcis selon la revendication 4, **caractérisée en ce que** l'ensemble de table rotative (100) comprend en outre: une base (102) agencée sous le corps de table rotative (101);
une plaque de guidage (103) disposée entre la base (102) et le corps de table rotative (101), dans lequel la plaque de guidage (103) est un cylindre dans son ensemble;
un premier rail de guidage (104) défini sur une surface externe de la plaque de guidage (103);
et un deuxième rail de guidage (105) défini sur un bord extérieur de la base (102).

12. Machine de formage d'aliments farcis selon la revendication 11, **caractérisée en ce que**, la plaque de guidage (103) est un cylindre continu.

13. Machine de formage d'aliments farcis selon la revendication 11, **caractérisée en ce que**, au moins une partie déconnectée est définie sur la plaque de guidage (103), et dans lequel la partie déconnectée est partiellement ou entièrement déconnectée.

14. Machine de formage d'aliments farcis selon l'une quelconque des revendications 1 à 3, **caractérisée en ce que** la partie d'envoi et de découpe (200) comprend:
un pilier de guidage (201);
un manchon cylindrique (202) emmanché sur le pilier de guidage (201);
une plaque de maintien de coupe (203) connectée au manchon de cylindre (202) et connectée à une roue excentrique (206) par l'intermédiaire d'une bielle (205);
dans lequel la roue excentrique (206) est entraînée directement par un moteur;
un couteau (204) monté sous la plaque de maintien de couteau (203);
une plaque de coupe (207) disposée sous le couteau (204);
et un trou de coupe (208) défini sur la plaque de coupe (207) correspondant au couteau (204).

15. Machine de formage d'aliments farcis selon la revendication 14, **caractérisée en ce que** la partie d'envoi et de découpe (200) comprend en outre:
deux supports d'emballage de pâte (209) disposés latéralement;
deux rouleaux d'alimentation en pâte (210) montés entre les deux supports d'emballage de pâte (209) en séquence et entraînés directement par un moteur;
une pluralité de rouleaux auxiliaires (211) disposés entre les deux rouleaux d'alimentation en pâte (210);
dans lequel la plaque de coupe (207) est disposée entre la pluralité de rouleaux auxiliaires (211);
un pilier de support (212) prévu sur un côté externe de chaque support d'emballage de pâte (209) et muni du pilier de guidage (201) sur une extrémité supérieure;
un rouleau entraîné (214) prévu au-dessus du rouleau d'alimentation en pâte (210); et
une courroie d'entraînement (215) reliait les deux rouleaux d'alimentation en pâte (210).

16. Machine de formage d'aliments farcis selon l'une quelconque des revendications 1 à 3, **caractérisée en ce que** la partie d'injection de farce (300) comprend:
un cadre de support (301);
une trémie (302) disposée sur le châssis de support (301);
une base rotative (303) agencée sur le cadre de support (301);
une vanne rotative (304) prévue à l'intérieur de la base rotative (303) et entraînée directement par un moteur pour tourner;
un tube d'entrée de rembourrage (305) reliant la trémie (302) et une extrémité supérieure de la base rotative (303);
un tube de sortie de rembourrage (306) connecté au-dessous de la base rotative (303);
un tube d'injection transversal (307) disposé sur un côté latéral de la base rotative (303);
une tige d'injection transversale (308) prévue à l'intérieur du tube d'injection transversal (307);
un tube d'injection de longitude (309) prévu à une sortie du tube de sortie de bourrage (306);
un mécanisme d'entraînement à crémaillère (310) entraînant le tube d'injection de longitude (309) pour se déplacer vers le haut et vers le bas;
un mécanisme d'entraînement de roue excentrique (311) entraînant la tige d'injection transversale (308) pour se déplacer horizontalement;
un convoyeur à vis (315) prévu à l'intérieur de la trémie (302); et
un mécanisme d'entraînement à vis sans fin (312) entraînant en rotation le transporteur à vis (315).

17. Machine de formage d'aliments farcis selon la revendication 16, **caractérisée en ce que** la partie d'injection de farce (300) comprend en outre:
une tige d'injection de longitude (313) prévue à l'intérieur du tube d'injection de longitude (309) et entraînée par le mécanisme d'entraînement de crémaillère (310) pour monter et descendre à l'intérieur du tube d'injection de longitude (309);
et un tunnel en forme de L (314) prévu à l'intérieur de la vanne rotative (304), dans lequel le mécanisme d'entraînement à crémaillère (310), le mécanisme d'entraînement à roue excentrique (311) et le mécanisme d'entraînement à vis sans fin (312) sont entraînés séparément par des moteurs différents; et dans lequel le mécanisme d'entraînement à crémaillère (310) est prévu à l'intérieur du cadre de support (301).

18. Machine de formage d'aliments farcis selon l'une quelconque des revendications 1 à 3, **caractérisée en ce que** la pièce de pressage et de façonnage (400) comprend:
un pilier de support (401);
une paire de moules de pressage (402) fixés sur le pilier de support (401);
dans lequel une partie supérieure d'au moins l'un des moules de pressage (402) est connectée à un moteur;
deux engrenages (403) prévus respectivement sur les extrémités supérieures de la paire de moules de pressage (402);
dans lequel les deux engrenages (403) sont en prise l'un avec l'autre;
deux blocs de pressage (404) prévus sur les deux extrémités inférieures de la paire de moules de pressage (402) respectivement; dans lequel les deux blocs de pression (404) sont opposés l'un à l'autre; et dans lequel les surfaces de pression des blocs de pression (404) sont incurvées; et dans lequel l'un des blocs de pression (404) est latéralement concave, et l'autre des blocs de pression (404) est latéralement convexe;
et deux plateaux tournants en demi-cercle (405) sur lesquels sont respectivement prévus les deux engrenages (403), dans lequel les surfaces incurvées des deux plaques rotatives (405) sont opposées l'une à l'autre.
